(19) Europäisches Patentamt / European Patent Office / Office européen des brevets

(11) **EP 2 463 335 B1**

(12) **EUROPEAN PATENT SPECIFICATION**

(45) Date of publication and mention
of the grant of the patent:
**02.12.2015 Bulletin 2015/49**

(21) Application number: **10806478.3**

(22) Date of filing: **04.08.2010**

(51) Int Cl.:
*C08L 9/02* (2006.01)          *C08K 3/00* (2006.01)
*C08L 27/06* (2006.01)        *C08L 33/00* (2006.01)
*C08J 3/215* (2006.01)

(86) International application number:
**PCT/JP2010/063168**

(87) International publication number:
**WO 2011/016479 (10.02.2011 Gazette 2011/06)**

(54) **NITRILE RUBBER COMPOSITION, CROSSLINKED NITRILE RUBBER COMPOSITION, CROSSLINKED RUBBER MATERIAL, AND METHOD FOR PRODUCING NITRILE RUBBER COMPOSITION**

NITRILKAUTSCHUKZUSAMMENSETZUNG, VERNETZTE NITRILKAUTSCHUKZUSAMMENSETZUNG, VERNETZTES KAUTSCHUKMATERIAL UND VERFAHREN ZUR HERSTELLUNG DER NITRILKAUTSCHUKZUSAMMENSETZUNG

COMPOSITION DE CAOUTCHOUC NITRILE, COMPOSITION DE CAOUTCHOUC NITRILE RÉTICULÉ, MATÉRIAU EN CAOUTCHOUC RÉTICULÉ, ET PROCÉDÉ DE PRODUCTION D UNE COMPOSITION DE CAOUTCHOUC NITRILE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.08.2009   JP 2009182900**

(43) Date of publication of application:
**13.06.2012   Bulletin 2012/24**

(73) Proprietor: **Zeon Corporation**
**Tokyo 100-8246 (JP)**

(72) Inventors:
 • **EJIRI Kazuhiro**
   **Tokyo 100-8246 (JP)**
 • **KATANO Chikara**
   **Tokyo 100-8246 (JP)**

 • **NAKAMURA Tadashi**
   **Tokyo 100-8246 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
| | |
|---|---|
| EP-A1- 2 246 389 | WO-A1-2008/123405 |
| WO-A1-2010/050552 | JP-A- H05 508 606 |
| JP-A- 2002 293 984 | JP-A- 2003 201 373 |
| JP-A- 2003 327 711 | JP-A- 2004 051 748 |
| JP-A- 2005 048 155 | JP-A- 2005 232 257 |
| JP-A- 2006 070 137 | JP-A- 2008 115 402 |
| JP-A- 2008 255 158 | US-A1- 2005 277 737 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a nitrile rubber composition and a crosslinkable nitrile rubber composition that each give a crosslinked nitrile rubber material excellent in resistance to permeation of gasoline, a crosslinked rubber material thereof, and a production process of the nitrile rubber composition.

BACKGROUND ART

Rubber (nitrile rubber) containing an $\alpha,\beta$-ethylenically unsaturated nitrile monomer unit and a conjugated diene monomer unit has heretofore been known as rubber excellent in oil resistance and is used as a material for various kinds of oil-related rubber products for industrial parts, automobiles and the like, such as fuel hoses, fuel gaskets, fuel packings, oil seals and inlet hoses.

Excellent oil resistance is also an important required item for this use. However, an attempt to reduce the amount of a fuel such as gasoline volatilized off in the air has been recently advanced with the enhancement of global environmental protection activities. For example, in Japan and Europe, $NO_x$ emission is regulated, and it is required to reduce the amount of the fuel volatilized off attending on this regulation. Therefore, it is required to make the resistance to permeation of gasoline better for uses such as fuel hoses, seals and packings.

Under such circumstances, Patent Literature 1 discloses a polymeric nano-composite material comprising 60 to 99% by weight of a polymer substrate such as styrene-butadiene rubber, butadiene rubber or acrylonitrile-butadiene rubber, 0.5 to 30% by weight of a laminar inorganic material such as smectite clay and 0.5 to 30% by weight of a specific polymer electrolyte. However, this polymeric nano-composite material has been required to more improve its resistance to permeation of gasoline.

CITATION LIST

PATENT LITERATURE

Patent Literature 1: Japanese Patent Application Laid-Open No. 2002-146211 (U.S. Patent No. 6,710,111)

SUMMARY OF INVENTION

TECHNICAL PROBLEM

It is an object of the present invention to provide a nitrile rubber composition and a crosslinkable nitrile rubber composition that each give a crosslinked nitrile rubber material excellent in resistance to permeation of gasoline, and a crosslinked rubber material thereof.

SOLUTION TO PROBLEM

The present inventors have carried out an extensive investigation with a view toward achieving the above object. As a result, it has been found that extremely good resistance to permeation of gasoline is exhibited when the particle diameter distribution of a laminar inorganic filler falls within a specific range, thus leading to completion of the present invention.

According to the present invention, there is thus provided a nitrile rubber composition comprising:

nitrile rubber (A) comprising 25 to 60% by weight of an $\alpha,\beta$-ethylenically unsaturated nitrile monomer unit, 40 to 75% by weight of a conjugated diene monomer unit, at least part of which may be hydrogenated, and 0 to 30% by weight of a cationic monomer unit, and

a laminar inorganic filler (B) contained in a proportion of 1 to 100 parts by weight per 100 parts by weight of the nitrile rubber (A), in a volume-based particle size distribution of said laminar inorganic filler (B), a) a ratio of a particle size distribution area of particles having a volume-based particle diameter of at least 1.0 $\mu$m to the whole particle size distribution area being at most 30%, b) a maximum peak particle diameter being 0.10 to 1.0 $\mu$m, and c) a frequency volume in the maximum peak particle diameter being at least 3.0%.

Incidentally, the content of the cationic monomer unit in the nitrile rubber (A) may be preferably 0.1 to 20% by weight, and the cationic monomer unit may be more preferably a vinyl group-containing cyclic tertiary amine monomer unit.

The nitrile rubber (A) may preferably contain 5 to 60% by weight of methyl ethyl ketone-insoluble matter.

The nitrile rubber composition according to the present invention may further comprise at least one thermoplastic resin selected from the group consisting of polyvinyl chloride resins and acrylic resins in a proportion of 1 to 100 parts by weight per 100 parts by weight of the nitrile rubber (A).

According to the present invention, there are also provided a crosslinkable nitrile rubber composition comprising the above-described nitrile rubber composition and a crosslinking agent, and a crosslinked rubber material obtained by crosslinking the crosslinkable nitrile rubber composition.

According to the present invention, there is further provided a production process of the nitrile rubber composition, comprising mixing

a latex of nitrile rubber (A) comprising 25 to 60% by weight of an $\alpha,\beta$-ethylenically unsaturated nitrile monomer unit, 40 to 75% by weight of a conjugated diene monomer unit, at least part of which may be hydrogenated, and 0 to 30% by weight of a cationic monomer unit, and

an aqueous dispersion of a laminar inorganic filler (B), in the volume-based particle size distribution of said laminar inorganic filler (B), a) a ratio of a particle size distribution area of particles having a volume-based particle diameter of at least 1.0 $\mu$m to the whole particle size distribution area being at most 30%, b) a maximum peak particle diameter being 0.10 to 1.0 $\mu$m, and c) a frequency volume in the maximum peak particle diameter being at least 3.0% at a quantity ratio that a proportion of solids of the laminar inorganic filler (B) to 100 parts by weight of solids of the nitrile rubber (A) amounts to 1 to 100 parts by weight, and then

coagulating the resultant mixture to form crumbs and drying the crumbs.

## ADVANTAGEOUS EFFECTS OF INVENTION

According to the present invention, there can be provided a nitrile rubber composition and a crosslinkable nitrile rubber composition that each give a crosslinked nitrile rubber material excellent in resistance to permeation of gasoline, and a crosslinked rubber material thereof. As a result, the crosslinked rubber material obtained from the nitrile rubber composition according to the present invention is also excellent in resistance to permeation of gasoline in addition to properties inherent in nitrile rubber having good oil resistance.

## BRIEF DESCRIPTION OF DRAWINGS

[FIG. 1] is a view for explaining a particle size distribution area ratio of a laminar inorganic filler (B).

[FIG. 2] is a view for explaining a maximum peak particle diameter and a frequency volume in the maximum peak particle diameter of the laminar inorganic filler (B).

## DESCRIPTION OF EMBODIMENTS

The nitrile rubber composition according to the present invention comprises:

nitrile rubber (A) comprising 25 to 60% by weight of an $\alpha,\beta$-ethylenically unsaturated nitrile monomer unit, 40 to 75% by weight of a conjugated diene monomer unit, at least part of which may be hydrogenated, and 0 to 30% by weight of a cationic monomer unit, and

a laminar inorganic filler (B) contained in a proportion of 1 to 100 parts by weight per 100 parts by weight of the nitrile rubber (A), in the volume-based particle size distribution of said laminar inorganic filler (B), a) a ratio of a particle size distribution area of particles having a volume-based particle diameter of at least 1.0 $\mu$m to the whole particle size distribution area being at most 30%, b) a maximum peak particle diameter being 0.10 to 1.0 $\mu$m, and c) a frequency volume in the maximum peak particle diameter being at least 3.0%.

[Nitrile rubber (A)]

The nitrile rubber (A) used in the present invention is nitrile rubber comprising 25 to 60% by weight of an $\alpha,\beta$-ethylenically unsaturated nitrile monomer unit, 40 to 75% by weight of a conjugated diene monomer unit, at least part of which may be hydrogenated, and 0 to 30% by weight of a cationic monomer unit.

No particular limitation is imposed on an $\alpha,\beta$-ethylenically unsaturated nitrile monomer forming the $\alpha,\beta$-ethylenically unsaturated nitrile monomer unit so far as it is an $\alpha,\beta$-ethylenically unsaturated compound having a nitrile group. However, examples thereof include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile. Among these, acrylonitrile and methacrylonitrile are preferred, and acrylonitrile is particularly preferred. These monomers may be used either singly or in any combination thereof.

The content of the $\alpha,\beta$-ethylenically unsaturated nitrile monomer unit in the nitrile rubber (A) is 25 to 60% by weight, preferably 30 to 56% by weight, more preferably 35 to 50% by weight based on the whole monomer unit. If the content of the $\alpha,\beta$-ethylenically unsaturated nitrile monomer unit is too low, the oil resistance and resistance to permeation of gasoline of the resulting crosslinked rubber material are deteriorated. If the content of the $\alpha,\beta$-ethylenically unsaturated nitrile monomer unit is too high on the other hand, the brittle temperature of the resulting crosslinked rubber material becomes high, and its cold resistance is deteriorated.

The nitrile rubber (A) used in the present invention contains the conjugated diene monomer unit for providing a crosslinked rubber material having rubber elasticity.

A conjugated diene monomer forming the conjugated diene monomer unit is preferably a conjugated diene monomer having 4 to 6 carbon atoms. Examples thereof include 1,3-butadiene, isoprene, 2,3-dimethyl-1,3-butadiene and 1,3-pentadiene. Among these, 1,3-butadiene is preferred. These monomers may be used either singly or in any combination thereof.

The content of the conjugated diene monomer unit in the nitrile rubber (A) is 40 to 75% by weight, preferably 43.9 to 69.9% by weight, more preferably 44.7 to 64.7% by weight based on the whole monomer unit.

If the content of the conjugated diene monomer unit is too low, there is a possibility that the rubber elasticity of the resulting crosslinked rubber material may be lowered. If the content of the conjugated diene monomer unit is too high on the other hand, there is a possibility that the resistance to permeation of gasoline of the resulting crosslinked rubber material may be deteriorated.

The nitrile rubber (A) used in the present invention preferably contains the cationic monomer unit. The cationic monomer unit means at least one monomer unit selected from the group consisting of cation-containing monomer units and monomer units capable of forming a cation.

No particular limitation is imposed on a cation-containing monomer forming the cation-containing monomer unit so far as it is a monomer forming such a monomer unit that the resulting polymer is positively charged when contacted with water or an aqueous solution of an acid. Examples of such a cation-containing monomer include quaternary ammonium salt group-containing monomers. Examples of a monomer forming the monomer unit capable of forming a cation include monomers having a precursor portion (substituent) forming a cation such as an ammonium salt (for example, amine hydrochloride or amine sulfate) when contacted with an aqueous solution of an acid such as hydrochloric acid or sulfuric acid like a tertiary amino group.

Specific examples of the cation-containing monomer include (meth)acrylic ester monomers containing a group having a quaternary ammonium salt, such as (meth)acryloyloxytrimethylammonium chloride, (meth)acryloyloxyhydroxy-propyltrimethylammonium chloride, (meth)acryloyloxytriethylammonium chloride, (meth)acryloyloxydimethylbenzylammonium chloride and (meth)acryloyloxytrimethylammonium methylsulfate; and (meth)acrylamide monomers containing a group having a quaternary ammonium salt, such as (meth)acrylamidopropyltrimethylammonium chloride and (meth)acrylamido-propyldimethylbenzylammonium chloride.

Specific examples of the monomer forming the monomer unit capable of forming a cation include vinyl group-containing cyclic tertiary amine monomers such as 2-vinylpyridine and 4-vinylpyridine; tertiary amino group-containing (meth)acrylic ester monomers such as dimethylaminoethyl (meth)acrylate; tertiary amino group-containing (meth)acrylamide monomers such as dimethylaminoethyl (meth)acrylamide and N,N-dimethylaminopropyl acrylamide; N-(4-anilinophenyl)-acrylamide; N-(4-anilinophenyl)methacrylamide; N-(4-anilinophenyl)-cinnamamide; N-(4-anilinophenyl)crotonamide; N-phenyl-4-(3-vinylbenzyloxy)-aniline; and N-phenyl-4-(4-vinylbenzyloxy)aniline. These monomers may be used either singly or in any combination thereof.

Among the above-described monomers, vinyl group-containing cyclic tertiary amine monomers, tertiary amino group-containing (meth)acrylic ester monomers and tertiary amino group-containing (meth)acrylamide monomers are preferred because the effects of the present invention become still more marked, vinyl group-containing cyclic tertiary amine monomers and tertiary amino group-containing acrylamide monomers are more preferred, vinyl group-containing cyclic tertiary amine monomers are still more preferred, vinyl group-containing pyridines are particularly preferred, and 2-vinylpyridine is most preferred.

The content of the cationic monomer unit is 0 to 30% by weight, preferably 0.1 to 20% by weight, particularly preferably 0.3 to 10% by weight based on the whole monomer unit. It is not essential to contain the cationic monomer unit. However, the resistance to permeation of gasoline of the resulting crosslinked rubber material is far excellently improved by containing the cationic monomer unit.

The nitrile rubber (A) used in the present invention may also contain, in addition to the $\alpha,\beta$-ethylenically un-saturated nitrile monomer unit, conjugated diene monomer unit and cationic monomer unit, units of other monomers copolymerizable with the monomers forming these monomer units. The content of such other monomer units is preferably at most 30% by weight, more preferably at most 20% by weight, still more preferably at most 10% by weight based on the whole monomer unit.

Examples of such copolymerizable other monomers include fluorine-containing vinyl compounds such as fluoroethyl vinyl ether, fluoropropyl vinyl ether, o-(trifluoro)methylstyrene, vinyl pentafluorobenzoate, difluoroethylene and tetrafluoroethylene; nonconjugated diene compounds such as 1,4-pentadiene, 1,4-hexadiene, vinylnorbomene and dicyclopentadiene; ethylene; oc-olefin compounds such as propylene, 1-butene, 4-methyl-1-pentene, 1-hexene and 1-octene; $\alpha,\beta$-ethylenically unsaturated monovalent carboxylic acids such as acrylic acid and methacrylic acid; $\alpha,\beta$-ethyl-enically unsaturated polyvalent carboxylic acids and anhydrides thereof, such as maleic acid, maleic anhydride, itaconic acid, itaconic anhydride, fumaric acid and maleic anhydride; alkyl esters of $\alpha,\beta$-ethylenically unsaturated carboxylic acids, such as methyl (meth)acrylate, ethyl (meth)acrylate, butyl (meth)acrylate and 2-ethylhexyl (meth)acrylate; mo-noesters and diesters of $\alpha,\beta$-ethylenically unsaturated polyvalent carboxylic acids, such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate and dibutyl itaconate; alkoxyalkyl esters of $\alpha,\beta$-ethylenically unsaturated carboxylic acids, such as methoxyethyl (meth)acrylate, methoxypropyl (meth)acrylate and butoxyethyl (meth)acrylate; hydroxyalkyl esters of $\alpha,\beta$-ethylenically unsaturated carboxylic acids, such as 2-hydroxyethyl (meth)acrylate and 3-hydroxypropyl (meth)acrylate; divinyl compounds such as divinylbenzene; di(meth)acrylic esters such as ethylene di(meth)acrylate, diethylene glycol di(meth)acrylate and ethylene glycol di(meth)acrylate; and tri(meth)acrylic esters such as trimethylolpropane tri(meth)acrylate; and besides self-crosslinkable compounds such as N-methylol (meth)acrylamide and N,N'-dimethylol (meth)acrylamide.

The Mooney viscosity (hereinafter may referred to as "polymer·Mooney viscosity") ($ML_{1+4}$, 100°C) of the nitrile rubber (A) is preferably 3 to 250, more preferably 15 to 180, still more preferably 20 to 160. If the polymer·Mooney viscosity of the nitrile rubber (a) is too low, there is a possibility that the strength properties of the resulting crosslinked rubber material may be lowered. If the viscosity is too high on the other hand, there is a possibility that the processability of the resulting composition may be deteriorated.

The nitrile rubber (A) used in the present invention can be produced by copolymerizing the respective monomers making up the nitrile rubber (A). No particular limitation is imposed on a process for copolymerizing the respective monomers. For example, an emulsion polymerization process, in which an emulsifier such as sodium dodecylbenzenesulfonate is used to obtain a latex of a copolymer having an average particle diameter of about 50 to 1,000 nm, or a suspension polymerization process (also including a fine suspension polymerization process), in which a dispersant such as polyvinyl alcohol is used to obtain a latex of a copolymer having an average particle diameter of about 0.2 to 200 $\mu$m, may be suitably used. Of these processes, the emulsion polymerization process is more preferred because the control of a polymerization reaction is easy.

The emulsion polymerization process is preferably conducted by the following procedure.

Incidentally, the $\alpha,\beta$-ethylenically unsaturated nitrile monomer, the conjugated diene monomer and the monomer forming the cationic monomer unit will hereinafter be suitably referred to as "monomer (m1)", "monomer (m2)" and "monomer (m3)", respectively.

More specifically, a process, in which a monomer mixture (the total amount of the monomers (m1), (m2) and (m3) amounts to 100% by weight) composed of 20 to 85% by weight, preferably 25 to 70% by weight, more preferably 30 to 60% by weight of the monomer (m1), 15 to 80% by weight, preferably 29.9 to 74.9% by weight, more preferably 39.7 to 69.7% by weight of the monomer (m2) and 0 to 30% by weight, preferably 0.1 to 20% by weight, particularly preferably 0.3 to 10% by weight of the monomer (m3) is emulsion-polymerized, the polymerization reaction is stopped at the point of time a conversion into a polymer has reached preferably 50 to 95% by weight, and unreacted monomers are then removed if desired, is preferred.

If the amount of the monomer (m1) used in the emulsion polymerization process is too small, the oil resistance and resistance to permeation of gasoline of the resulting crosslinked rubber material are deteriorated. If the amount of the monomer (m1) used is too large on the other hand, there is a tendency to deteriorate the cold resistance. If the amount of the monomer (m2) used is too small, the cold resistance of the resulting crosslinked rubber material is deteriorated. If the amount of the monomer (m2) used is too large on the other hand, there is a tendency to deteriorate the resistance to permeation of gasoline of the resulting crosslinked rubber material. The monomer (m3) is used within the above-described range, whereby the resistance to permeation of gasoline of the resulting crosslinked rubber material can be still more improved.

Incidentally, if the conversion into the polymer at the time the polymerization reaction has been stopped is too low, it is very difficult to recover the unreacted monomers. If the conversion is too high on the other hand, the normal physical properties of the resulting crosslinked rubber material are deteriorated.

When the emulsion polymerization is conducted, an emulsifier, a polymerization initiator, secondary materials for polymerization, etc. which are conventionally known in the field of the emulsion polymerization may be suitably used, and the polymerization temperature and polymerization time may also be suitably adjusted.

The whole amount of the monomers (m1), (m2) and (m3) used in the emulsion polymerization may be used to start the polymerization reaction. However, it is preferable from the viewpoint of controlling a composition distribution of the respective monomer units in a copolymer formed to obtain a crosslinked rubber material richer in rubber elasticity that a part of the whole amount of the monomers (m1), (m2) and (m3) used in the emulsion polymerization is used to start the polymerization reaction, and the remainder of the monomers (m1), (m2) and (m3) used in the emulsion polymerization is then added in the middle of the reaction to continue the polymerization reaction. The reason for it is that when the whole amount of the monomers (m1), (m2) and (m3) used in the emulsion polymerization is used in the reaction from the beginning of the polymerization reaction, the composition distribution of the resulting copolymer becomes wide.

In this case, it is preferable that a monomer mixture composed of preferably 10 to 100%, more preferably 20 to 100% by weight, particularly preferably 30 to 100% of the whole amount of the monomer (m1) used in the polymerization, preferably 5 to 90%, more preferably 10 to 80% by weight, particularly preferably 15 to 70% of the whole amount of the monomer (m2) used in the polymerization, and preferably 0 to 100%, more preferably 30 to 100% by weight, particularly preferably 70 to 100% of the whole amount of the monomer (m3) used in the polymerization is charged into a reactor to start a polymerization reaction, and the remainder of the monomers is then added into the reactor at the time a conversion of the monomer mixture charged into the reactor into a polymer has reached a range of 5 to 80% by weight, thereby continuing the polymerization reaction. Incidentally, even when the monomer (m3) is not used, it is preferable that the above-described amounts of the monomers (m1) and (m2) used in the polymerization are used to start the polymerization reaction, and the remainder of the monomers (m1) and (m2) is then added into the reactor to conduct polymerization.

No particular limitation is imposed on a method for adding the remainder of the monomers, and the remainder may be added at a time or in portions or continuously. In the present invention, the remainder of the monomers is preferably added in portions in that the composition distribution of the resulting copolymer can be more simply controlled, and the remainder is particularly preferably added in 1 to 6 portions. When the remainder of the monomers is added in portions, the respective amounts and times of the monomers added in portions may be adjusted according to the proceeding of the polymerization reaction so as to obtain desired nitrile rubber (A).

After completion of the polymerization reaction, unreacted monomers are removed by a publicly known method such as heating and distillation, vacuum distillation or steam distillation, thereby obtaining a latex of the nitrile rubber (A). In the present invention, a solid content concentration in the latex of the nitrile rubber (A) obtained by the emulsion polymerization process is preferably 5 to 70% by weight, more preferably 10 to 60% by weight, particularly preferably 15 to 50% by weight.

The nitrile rubber (A) used in the present invention may be hydrogenated nitrile rubber that at least part of carbon-carbon unsaturated bonds in a conjugated diene unit portion of the copolymer obtained by the copolymerization in the above-described manner have been hydrogenated (subjected to a hydrogenation reaction). No particular limitation is imposed on a hydrogenating method, and a publicly known method may be adopted. When the nitrile rubber (A) is used as the hydrogenated nitrile rubber, the iodine value thereof is within a range of preferably 0 to 70, more preferably 4 to 60. The nitrile rubber (A) is hydrogenated into the hydrogenated nitrile rubber, whereby the heat resistance, weather resistance, ozone resistance, etc. can be improved.

Incidentally, the nitrile rubber (A) preferably contain 5 to 60% by weight, preferably 10 to 45% by weight, particularly preferably 15 to 35% by weight of methyl ethyl ketone-insoluble matter from the viewpoint of improving the resistance of permeation of gasoline.

Here, the content of the methyl ethyl ketone-insoluble matter is determined by immersing 1 g of the nitrile rubber (A) in 200 ml of methyl ethyl ketone, leaving it to stand for 24 hours at 23°C, filtering the resulting solution through a 325-mesh wire gauze, evaporating the resulting filtrate to dryness and then weighing the remaining dry solids [methyl ethyl ketone-soluble matter: y (g)] thus obtained to calculate out the content of the methyl ethyl ketone-insoluble matter in accordance with the following equation.

$$\text{Content of methyl ethyl ketone-insoluble matter (\% by weight)} = 100 \times (1 - y)/1$$

The control of the content of the methyl ethyl ketone-insoluble matter can be conducted by a method of, in the above-described emulsion polymerization, (a) reducing the amount of a chain-transfer agent or increasing the polymerization temperature or (b) increasing the methyl ethyl ketone-insoluble matter by copolymerizing a polyfunctional ethylenically unsaturated monomer such as divinylbenzene, ethylene glycol dimethacrylate or trimethylolpropane trimethacrylate or a self-crosslinkable compound such as N-methylol (meth)acrylamide or N,N'-dimethylol (meth)acrylamide. However, the method (a) is preferred.

From the viewpoint of easy control of the content of the methyl ethyl ketone-insoluble matter, it is better to mix a latex of nitrile rubber whose content of methyl ethyl ketone-insoluble matter is lower than 5% by weight and which is obtained by using a sufficient amount of a chain-transfer agent to conduct emulsion polymerization at a temperature lower than 10°C and a latex of nitrile rubber whose content of methyl ethyl ketone-insoluble matter is not lower than 20% by weight and which is obtained by reducing the amount of the chain-transfer agent to conduct emulsion polymerization at a temperature not lower than 15°C at such a quantity ratio that the content of the methyl ethyl ketone-insoluble matter falls within the predetermined range to provide a latex of the nitrile rubber (A).

[Laminar inorganic filler (B)]

In order to make the resulting crosslinked rubber material have excellent resistance to permeation of gasoline, the nitrile rubber (A) composition according to the present invention contains a laminar inorganic filler (B) that in a volume-based particle size distribution, a) a ratio of a particle size distribution area of particles having a volume-based particle diameter of at least 1.0 $\mu$m to the whole particle size distribution area is at most 30%, b) a maximum peak particle diameter is 0.10 to 1.0 $\mu$m, and c) a frequency volume in the maximum peak particle diameter is at least 3.0%, in a proportion of 1 to 100 parts by weight per 100 parts by weight of the nitrile rubber (A).

The laminar inorganic filler (B) is an inorganic compound having an aspect ratio of 30 to 2,000 and a flat, platy inorganic filler. If the aspect ratio is too low, the resistance to permeation of gasoline of the resulting crosslinked rubber material is deteriorated. If the aspect ratio is too high on the other hand, it is difficult to disperse such an inorganic filler in the nitrile rubber (A) composition, and the mechanical strength of the crosslinked rubber material is lowered. The aspect ratio of the laminar inorganic filler (B) is preferably 100 to 1,500, particularly preferably 200 to 1,000.

The aspect ratio of the laminar inorganic filler (B) can be calculated out by determining a ratio of a surface average diameter to an average thickness of primary particles of the laminar inorganic filler (B). Here, the surface average diameter and average thickness are number average values calculated out as respective arithmetical average values by measuring diameters in a surface direction and thicknesses of 100 particles of the laminar inorganic filler (B) selected at random through an atomic force microscope.

No particular limitation is imposed on the laminar inorganic filler (B) used in the present invention, and it may be any of that derived from a natural product, that obtained by subjecting the natural product to a treatment such as purification and a synthetic product. Specific examples thereof include kaolinites such as kaolinite and halloysite; smectites such as montmorillonite, beidellite, nontronite, saponite, hectorite, stevensite and mica; vermiculites; chlorites; talc; and glass flakes that are amorphous platy particles such as E glass and C glass. Among these, smectites are preferred, and montmorillonite, mica and saponite are particularly preferred. These may be used either singly or in any combination thereof. Incidentally, montmorillonite, mica and saponite are excellent in dispersibility in the cationic monomer unit in the nitrile rubber (A) because they have a multi-layer structure having an exchangeable cation between layers.

Here, montmorillonite among those described above is contained as a main component in bentonite. Therefore, that obtained from bentonite, preferably by purifying it, may be used as montmorillonite.

The laminar inorganic filler (B) used in the present invention is a laminar inorganic filler (B) that in a volume-based particle size distribution, a) a ratio of a particle size distribution area of particles having a volume-based particle diameter of at least 1.0 $\mu$m to the whole particle size distribution area is at most 30%, b) a maximum peak particle diameter is 0.10 to 1.0 $\mu$m, and c) a frequency volume in the maximum peak particle diameter is at least 3.0%.

Here, the volume-based particle size distribution of the laminar inorganic filler (B) is determined by using a laser diffraction scattering particle size measuring apparatus.

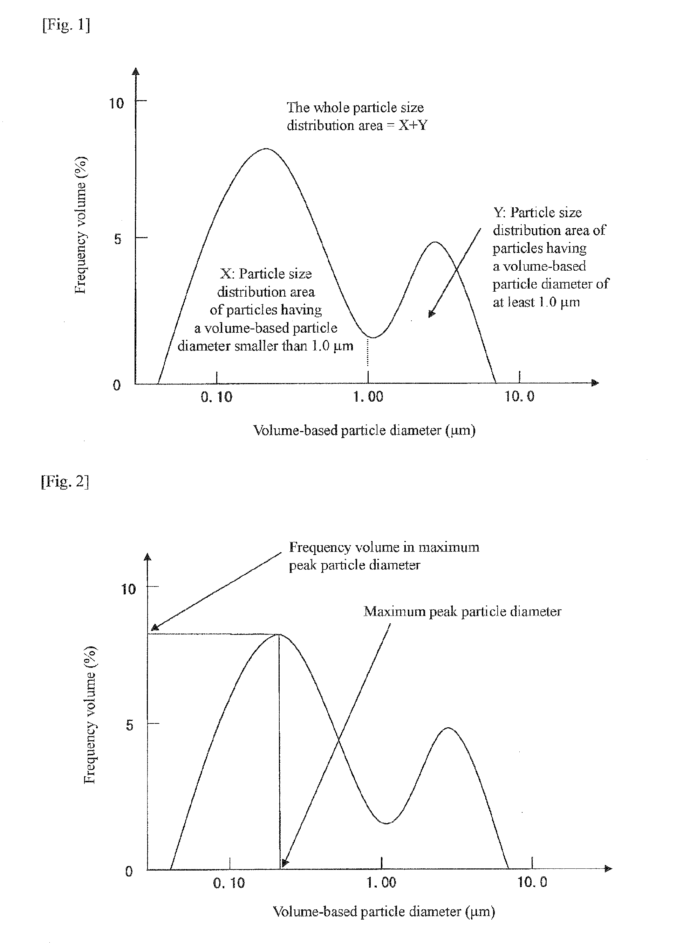

Incidentally, "a) a ratio of a particle size distribution area of particles having a volume-based particle diameter of at least 1.0 $\mu$m to the whole particle size distribution area" means a ratio (%) determined by $Y/(X + Y) \times 100$ when a volume-based particle size distribution is measured by means of a laser diffraction scattering particle size measuring apparatus (LS230, manufactured by BECKMAN COULTER, INC.), a volume-based particle diameter ($\mu$m) is plotted as a value converted to a base 10 logarithm ($\log_{10}$) on an axis of abscissa, and a frequency volume (%) is plotted on an axis of ordinate as illustrated in FIG. 1 (X designates a particle size distribution area of particles having a volume-based particle diameter smaller than 1.0 $\mu$m, and Y designates a particle size distribution area of particles having a volume-based particle diameter of at least 1.0 $\mu$m. Accordingly, $X + Y$ designates the whole particle size distribution area.). Here, "a frequency volume (%)" means a value obtained by determining a value (regarding this value as "Q") obtained by integrating ["the number of particles of each volume-based particle diameter" x "a volume of the particle"] (regarding this product as "P") on all volume-based particle diameters and normalizing this value in such a manner that the total of P/Q values in the all volume-based particle diameters is 100%.

In addition, "b) a maximum peak particle diameter" means a volume-based particle diameter that a frequency volume becomes maximum as illustrated in FIG. 2 when a volume-based particle size distribution is measured by means of the same laser diffraction scattering particle size measuring apparatus as described above.

Further, "c) a frequency volume in the maximum peak particle diameter" means a frequency volume of a particle in the case where a volume-based particle diameter of the particle corresponds to the maximum peak particle diameter as illustrated in FIG. 2 when a volume-based particle size distribution is measured by means of the same laser diffraction scattering particle size measuring apparatus as described above.

If the ratio of the particle size distribution area of particles having a volume-based particle diameter of at least 1.0 $\mu$m to the whole particle size distribution area in the laminar inorganic filler (B) exceeds 30%, a proportion of coarse particles becomes high, and the unevenness of the particle size distribution increases, so that the resistance of permeation of gasoline is deteriorated, excellent original-state physical properties are also not achieved, and there is a possibility that a stable latex composition may not be prepared.

The ratio of the particle size distribution area of particles having a volume-based particle diameter of at least 1.0 $\mu$m to the whole particle size distribution area in the laminar inorganic filler (B) is preferably 0.1 to 28%, particularly preferably 1 to 27% because the effects of the present invention become still more marked.

If the maximum peak particle diameter in the laminar inorganic filler (B) is smaller than 0.10 $\mu$m, a proportion of ultrafine particles becomes high, so that such a filler is not said to be a flat, platy inorganic filler, and the resistance of permeation of gasoline is deteriorated. If the maximum peak particle diameter in the laminar inorganic filler (B) exceeds 1.0 $\mu$m, a proportion of coarse particles becomes high, and the unevenness of the particle size distribution increases, so that the resistance of permeation of gasoline is deteriorated, excellent original-state physical properties are also not achieved, and there is a possibility that a stable latex composition may not be prepared.

The maximum peak particle diameter in the laminar inorganic filler (B) is preferably 0.10 to 0.70 $\mu$m, particularly preferably 0.10 to 0.40 $\mu$m because the effects of the present invention become still more marked.

If the frequency volume in the maximum peak particle diameter in the laminar inorganic filler (B) is smaller than 3.0%, the unevenness of the particle size distribution increases, so that the resistance of permeation of gasoline is deteriorated.

The frequency volume in the maximum peak particle diameter in the laminar inorganic filler (B) is preferably 3.0 to 20%, particularly preferably 3.0 to 10% because the effects of the present invention become still more marked.

The volume-based average particle diameter of the laminar inorganic filler (B) as measured by the laser diffraction scattering particle size measuring apparatus is preferably 0.10 to 1.0 $\mu$m, more preferably 0.10 to 0.90 $\mu$m, still more preferably 0.10 to 0.50 $\mu$m.

With respect to a method for obtaining the laminar inorganic filler (B) used in the present invention, it is preferable to stir a laminar inorganic filler together with a dispersant such as sodium polyacrylate in water to prepare an aqueous dispersion (C) of the laminar inorganic filler, leave the aqueous dispersion (C) to stand for a predetermined period of time for stabilizing it, then centrifuge the aqueous dispersion (C) for a predetermined period of time by means of a centrifugal separator and collect a supernatant liquid of the resultant slurry liquid in such a manner that the laminar inorganic filler (B) becomes a predetermined volume-based particle size distribution.

In the above-described method, the aqueous dispersion (C) preferably contains the dispersant such as sodium polyacrylate and water in proportion of 1 to 20 parts by weight and 500 to 5,000 parts by weight, respectively, per 100 parts by weight of the laminar inorganic filler.

The standing time for stabilizing the aqueous dispersion (C) is preferably 10 to 50 hours. In addition, the time required for the centrifugation by the centrifugal separator is preferably from 5 minutes to 5 hours.

The temperature at which the aqueous dispersion (C) is prepared, the temperature at which the aqueous dispersion (C) is left to stand, and the temperature at which the centrifugation is conducted are each preferably 15 to 40°C.

The treatment is conducted under the above-described conditions, thereby easily obtaining the laminar inorganic filler (B) of the predetermined volume-based particle size distribution.

Incidentally, the supernatant liquid of the slurry liquid after the centrifugation is collected, cooled to 0°C or lower and frozen, and the frozen liquid is freeze-ground by steel balls made of tungsten carbide or the like and then heated to re-melt, whereby the maximum peak particle diameter of the laminar inorganic filler can be made smaller.

The content of the laminar inorganic filler (B) is 1 to 100 parts by weight, preferably 3 to 70 parts by weight, more preferably 5 to 40 parts by weight per 100 parts by weight of the nitrile rubber (A). If the content of the laminar inorganic filler (B) is too low, the resistance to permeation of gasoline and normal physical properties are deteriorated. If the content of the laminar inorganic filler (B) is too high on the other hand, there is a tendency for the elongation of the resulting crosslinked rubber material to lower.

[Thermoplastic resin]

The nitrile rubber composition according to the present invention may contain other polymers such as rubber and resins in addition to the nitrile rubber (A) within limits not impeding the effects of the present invention and preferably further contains at least one thermoplastic resin selected from the group consisting of polyvinyl chloride resins and acrylic resins. The composition contains at least one thermoplastic resin selected from the group consisting of polyvinyl chloride resins and acrylic resins, whereby the ozone resistance can be still more improved when the composition is converted to a crosslinked rubber material.

The polyvinyl chloride resins used in the present invention comprise vinyl chloride as a main constituent monomer making up the resins, and the content of this monomer unit is preferably 50 to 100% by weight, more preferably 60 to 100% by weight, particularly preferably 70 to 100% by weight.

The acrylic resins used in the present invention comprise an alkyl (meth)acrylate as a main constituent monomer making up the resins, and the content of this monomer unit is preferably 50 to 100% by weight, more preferably 60 to 100% by weight, particularly preferably 70 to 100% by weight. Incidentally, the number of carbon atoms in the alkyl group of the alkyl (meth)acrylate is preferably 1 to 20, more preferably 1 to 18, particularly preferably 1 to 10.

These thermoplastic resins are preferably particulate, and the volume-based average particle diameter thereof is preferably 0.01 $\mu$m to 1 mm, more preferably 0.05 to 100 $\mu$m, particularly preferably 0.1 to 10 $\mu$m. The volume-based average particle diameter is measured by a laser diffraction scattering particle size measuring apparatus. If the volume-based average particle diameter of the resin is too small, there is a possibility that the ozone resistance of the resulting crosslinked rubber material may be lowered. If the volume-based average particle diameter is too large on the other hand, there is a possibility that dispersion failure may occur upon kneading.

The Tg [glass transition temperature measured by a differential scanning calorimeter (DSC)] of the thermoplastic resin is preferably 50 to 180°C, particularly preferably 60 to 150°C.

No particular limitation is imposed on the polymerization degrees or molecular weights of the polyvinyl chloride resins and acrylic resins. However, the average polymerization degree of the vinyl chloride resins is preferably 400 to 3,000, more preferably 600 to 2,000 as measured according to the solution viscosity method prescribed in JIS K 6721. The number-average molecular weight of the acrylic resins is preferably 10,000 to 7,000,000, more preferably 100,000 to 2,000,000 in terms of standard polystyrene as measured by gel permeation chromatography (GPC) using tetrahydrofuran as a solvent.

If the polymerization degree or molecular weight is too low, there is a possibility that the ozone resistance of the resulting crosslinked rubber material may be deteriorated. If the polymerization degree or molecular weight is too high on the other hand, the molding or forming and processing ability of the composition may become poor in some cases.

The content of at least one thermoplastic resin selected from the group consisting of the polyvinyl chloride resins and acrylic resins is preferably 1 to 100 parts by weight, more preferably 15 to 80 parts by weight, particularly preferably 20 to 70 parts by weight per 100 parts by weight of the nitrile rubber (A). If the content of at least one thermoplastic resin selected from the group consisting of the polyvinyl chloride resins and acrylic resins is too low, it is difficult to achieve the effect brought by the addition thereof. If the content is too high on the other hand, there is a possibility that the cold resistance may be deteriorated.

[Plasticizer]

The nitrile rubber composition according to the present invention preferably contains a plasticizer. When a plasticizer having an SP value (solubility parameter) of 8.0 to 10.2 $(cal/cm^3)^{1/2}$ as measured by the HOY method is used as the plasticizer, the resistance of permeation of gasoline of the resulting crosslinked rubber composition becomes excellent. In addition, the brittle temperature thereof becomes low and the cold resistance also becomes excellent.

Specific examples (the unit of the SP value is "$(cal/cm^3)^{1/2}$") of such a plasticizer include esterified compounds of adipic acid with ether bond-containing alcohols, such as dibutoxyethyl adipate (SP value: 8.8), di(butoxyethoxyethyl) adipate (SP value: 9.2), di(methoxytetraethylene glycol) adipate, di(methoxypentaethylene glycol) adipate and (methoxytetraethylene glycol)-(methoxypentaethylene glycol) adipate; esterified compounds of azelaic acid with ether bond-containing alcohols, such as dibutoxyethyl azelate and di(butoxyethoxyethyl) azelate; esterified compounds of sebacic acid with ether bond-containing alcohols, such as dibutoxyethyl sebacate and di(butoxyethoxyethyl) sebacate; esterified compounds of phthalic acid with ether bond-containing alcohols, such as dibutoxyethyl phthalate and di(butoxyethoxyethyl) phthalate; esterified compounds of isophthalic acid with ether bond-containing alcohols, such as dibutoxyethyl isophthalate and di(butoxyethoxyethyl) isophthalate; dialkyl esters of adipic acid, such as di(2-ethylhexyl) adipate (SP value: 8.5), diisodecyl adipate (SP value: 8.3), diisononyl adipate and dibutyl adipate (SP value: 8.9); dialkyl esters of azelaic acid, such as di(2-ethylhexyl) azelate (SP value: 8.5), diisooctyl azelate and di-n-hexyl azelate; dialkyl esters of sebacic acid, such as di-n-butyl sebacate (SP value: 8.7) and di(2-ethylhexyl) sebacate (SP value: 8.4); dialkyl esters of phthalic acid, such as dibutyl phthalate (SP value: 9.4), di(2-ethylhexyl) phthalate (SP value: 9.0), di-n-octyl phthalate, diisobutyl phthalate, diheptyl phthalate (SP value: 9.0), diisodecyl phthalate (SP value: 8.5), diundecyl phthalate (SP value: 8.5) and diisononyl phthalate (SP value: 8.9); dicycloalkyl esters of phthalic acid, such as dicyclohexyl phthalate; aryl esters of phthalic acid, such as diphenyl phthalate and butylbenzyl phthalate (SP value: 10.2); dialkyl esters of isophthalate, such as di(2-ethylhexyl) isophthalate and diisooctyl isophthalate; dialkyl esters of tetrahydrophthalic acid, such as di(2-ethylhexyl) tetrahydrophthalate, di-n-octyl tetrahydrophthalate and diisodecyl tetrahydrophthalate; trimellitic acid derivatives such as tri(2-ethylhexyl) trimellitate (SP value: 8.9), tri-n-octyl trimellitate (SP value: 8.9), triisodecyl trimellitate (SP value: 8.4), triisooctyl trimellitate, tri-n-hexyl trimellitate, triisononyl trimellitate (SP value: 8.8) and triisodecyl trimellitate (SP value: 8.8); epoxy plasticizers such as epoxidized soybean oil (SP value: 9.0) and epoxidized linseed oil (SP value: 9.3); and phosphate plasticizers such as tricresyl phosphate (SP value: 9.7). These plasticizers may be used either singly or in any combination thereof.

Among these, esterified compounds of dibasic acids such as adipic acid, azelaic acid, sebacic acid and phthalic acid with ether bond-containing alcohols are preferred because the resistance to permeation of gasoline and cold resistance of the resulting crosslinked rubber material can be made good, esterified compounds of adipic acid with ether bond-containing alcohols are more preferred, and di(butoxyethoxyethyl) adipate is particularly preferred.

The content of the plasticizer in the nitrile rubber composition according to the present invention is preferably 0.1 to 200 parts by weight, more preferably 1 to 150 parts by weight, particularly preferably 5 to 50 parts by weight per 100 parts by weight of the nitrile rubber (A). When the content of the plasticizer falls within the above range, bleeding can be prevented, and the effects of the present invention become still more marked.

Besides the above, compounding additives generally used in rubber, for examples, additives such as crosslink retarders, reinforcing agents, other fillers than the laminar inorganic filler (B), antioxidants, lubricants, tackifier, lubricating agents, processing aids, flame retardants, mildewproofing agents, antistatic agents and colorants may also be compounded into the nitrile rubber compound according to the present invention as needed.

In addition, the nitrile rubber composition according to the present invention may contain other rubber than the nitrile rubber (A) within limits not impeding the effects of the present invention. No particular limitation is imposed on the other rubber than the nitrile rubber (A). As examples thereof, however, may be mentioned acrylic rubber, ethylene-acrylic acid copolymer rubber, fluorine-containing rubber, styrene-butadiene copolymer rubber, ethylene-propylene copolymer rubber, ethylene-propylene-diene terpolymer rubber, epichlorohydrin rubber, urethane rubber, chloroprene rubber, ethylene-vinyl acetate copolymers, chlorosulfonated polyethylene, natural rubber and polyisoprene rubber. Incidentally, when the other rubber than the nitrile rubber (A) is compounded, the amount thereof is preferably at most 100 parts by weight, more preferably at most 50 parts by weight, particularly preferably at most 30 parts by weight per 100 parts by weight of the nitrile rubber (A) in order not to impair the excellent oil resistance and normal physical properties of the nitrile rubber (A).

[Preparation of nitrile rubber composition]

No particular limitation is imposed on a process for preparing the nitrile rubber composition according to the present invention. However, the following process is preferred.

More specifically, a latex of nitrile rubber having an average particle diameter of 0.05 to 10 $\mu$m and obtained by emulsion polymerization, suspension polymerization, etc. is used as the nitrile rubber (A), an aqueous dispersion of the laminar inorganic filler (B) is added to this latex to prepare a latex composition. This latex composition is brought into contact with a coagulating liquid containing a coagulant, thereby coagulating the latex to form crumbs. The crumbs are separated by filtration, washed and then dried, thereby obtaining the nitrile rubber composition according to the present invention, which contains the nitrile rubber (A) and the laminar inorganic filler (B). When this process is adopted, the nitrile rubber (A) and the laminar inorganic filler (B) are uniformly mixed in a micro-structure, and such a composition is easy to provide a crosslinked rubber material excellent in resistance to permeation of gasoline and normal physical properties.

When a nitrile rubber composition containing a plasticizer is prepared, it is only necessary to add the plasticizer in the form of an aqueous emulsion to the above-described latex composition and mix them. When this process is adopted, the nitrile rubber (A), the laminar inorganic filler (B) and the plasticizer are uniformly mixed in a micro-structure, and such a composition becomes hard to cause bleeding of the plasticizer and is easy to provide a crosslinked rubber material excellent in cold resistance.

No particular limitation is imposed on a method for preparing the aqueous emulsion of the plasticizer. However, it is preferable to add the plasticizer while strongly stirring a water medium containing a surfactant in an amount of 0.5 to 10% by weight based on the plasticizer to prepare the emulsion. Examples of the surfactant include anionic surfactants such as potassium rosinate, sodium laurylsulfate, potassium oleate and sodium dodecylbenzenesulfonate; nonionic surfactants such as polyoxyethylene alkyl ethers, polyoxyethylene alkyl esters and polyoxyethylene sorbitan alkyl esters; and cationic surfactants such as didecyldimethylammonium chloride and stearyltrimethylammonium chloride. Incidentally, the concentration of the plasticizer in the aqueous emulsion is preferably controlled to 5 to 70% by weight.

No particular limitation is imposed on a method for coagulating the latex composition, and a publicly known method such as salting-out coagulation is applied. Among others, it is preferable to add the latex composition to an aqueous solution containing a coagulant to salt-out the composition. Examples of the coagulant include calcium chloride, sodium chloride, calcium hydroxide, aluminum sulfate and aluminum hydroxide. The amount of the coagulant used is preferably 0.5 to 150 parts by weight, particularly preferably 0.5 to 20 parts by weight per 100 parts by weight of the nitrile rubber (A).

When the nitrile rubber (A) contains the cationic monomer unit, an aqueous solution of dilute sulfuric acid or the like is preferably added upon the salting-out of the latex composition to control the pH of the aqueous solution of the coagulant to an isoelectric point of the latex composition of the nitrile rubber (A) or lower. The pH of the aqueous solution of the coagulant is controlled, whereby the zeta potential of the functional group that the cationic monomer unit contained in the nitrile rubber (A) has can be increased, thereby improving the dispersibility of the laminar inorganic filler (B) and making the particle diameter of the crumbs obtained by the coagulation large.

The particle diameter of the crumbs greatly affects the degree of dehydration by a vibrating screen or squeezer that is subsequent to the coagulation and a washing step, a collecting rate of the crumbs, and the degree of dryness in a drying step, so that the average particle diameter of the crumbs is preferably 0.5 to 40 mm. The washing, dehydrating and drying methods of the crumbs are the same as the washing, dehydrating and drying methods in the general production of rubber. With respect to the washing and dehydrating methods, it is only necessary to separate the crumbs by the coagulation from water by means of a reticulate filter, centrifugal separator or the like, and then wash and dehydrate the crumbs by a squeezer or the like. Then, the crumbs are dried by a band dryer, twin-screw extruder or the like used in the general production of rubber to a desired water content, whereby the nitrile rubber composition according to the present invention can be obtained. The coagulation and drying may also be conducted at the same time in the twin-screw extruder.

When at least one thermoplastic resin selected from the group consisting of the polyvinyl chloride resins and acrylic resins is caused to be contained in the nitrile rubber composition according to the present invention, it is only necessary to mix (latex-blend) a polyvinyl chloride resin or acrylic resin in a state of a latex, which has been prepared by a conventionally known emulsion polymerization process, with the latex composition containing the laminar inorganic filler (B), which has been prepared in the above-described manner.

Components such as an antioxidant and a reinforcing agent are then added to the rubber composition obtained by coagulating the latex composition (which may contain the plasticizer, the polyvinyl chloride resin, the acrylic resin and the like) to form crumbs and drying the crumbs as needed, and the resultant mixture is kneaded by a kneader such as rolls or a Banbury mixer, thereby preparing the nitrile rubber composition according to the present invention.

Incidentally, as another preparation process of the nitrile rubber composition according to the present invention than the above-described process, the nitrile rubber composition may also be obtained by, for example, causing the all the components such as the inorganic filler (B), and the plasticizer, polyvinyl chloride resin and acrylic resin which are added as needed, or at least one component thereof, to be contained in the whole amount or part thereof in the latex of the nitrile rubber (A), coagulating and drying the resultant mixture and then kneading the mixture and the remainder of the above components, if any, together with components such as the other filler than the laminar inorganic filler (B), antioxidant and reinforcing agent which are added as needed by a kneader such as rolls or a Banbury mixer.

[Crosslinkable nitrile rubber composition]

The crosslinkable nitrile rubber composition according to the present invention comprises the nitrile rubber composition according to the present invention and a crosslinking agent. Examples of the crosslinking agent include sulfur-containing crosslinking agents and organic peroxide crosslinking agents. These crosslinking agents may be used either singly or in any combination thereof. However, a sulfur-containing crosslinking agent is preferably used.

Examples of the sulfur-containing crosslinking agents include sulfur such as powder sulfur, sublimed sulfur, precipitated sulfur, colloidal sulfur, surface-treated sulfur and insoluble sulfur; sulfur-containing compounds such as sulfur chloride, sulfur dichloride, morpholine disulfide, alkylphenol disulfides, dibenzothiazyl disulfide, N,N'-dithio-bis(hexahydro-2H-azepin-2-one), phosphorus-containing polysulfides and polymeric polysulfides; and sulfur-donating compounds such as tetramethylthiuram disulfide, selenium dimethyldithiocarbamate and 2-(4'-morpholinodithio)benzothiazole. These crosslinking agents may be used either singly or in any combination thereof.

Examples of the organic peroxide crosslinking agents include dicumyl peroxide, cumene hydroperoxide, t-butylcumyl peroxide, para-menthane hydroperoxide, di-t-butyl peroxide, 1,3-bis(t-butyl peroxyisopropyl)benzene, 1,4-bis(t-butyl peroxyisopropyl)benzene, 1,1-di-t-butyl peroxy-3,3-trimethylcyclohexane, 4,4-bis(t-butyl-peroxy)-n-butyl valerate, 2,5-dimethyl-2,5-di-t-butylperoxyhexane, 2,5-dimethyl-2,5-di-t-butylperoxyhexyne-3, 1,1-di-t-butylperoxy-3,5,5-trimethylcyclohexane, p-chlorobenzoyl peroxide, t-butyl peroxyisopropyl carbonate and t-butyl peroxybenzoate. These crosslinking agents may be used either singly or in any combination thereof.

No particular limitation is imposed on the content of the crosslinking agent in the crosslinkable nitrile rubber composition formed from the nitrile rubber composition according to the present invention. However, the content is preferably 0.1 to 10 parts by weight, more preferably 0.2 to 5 parts by weight per 100 parts by weight of the nitrile rubber (A).

When the sulfur-containing crosslinking agent is used, a crosslinking aid such as zinc white or stearic acid and a crosslinking promotor of a guanidine, aldehyde-amine, aldehyde-ammonia, thiazole, sulfenamide or thiourea type may be used in combination. No particular limitation is also imposed on the content of these crosslinking aid and crosslinking promotor. However, the content is preferably within a range of 0.1 to 10 parts by weight per 100 parts by weight of the nitrile rubber (A).

When the organic peroxide crosslinking agent is used, a polyfunctional monomer such as trimethylolpropane trimethacrylate, divinylbenzene, ethylene dimethacrylate or triallyl isocyanurate may be used as a crosslinking aid in combination. No particular limitation is imposed on the amount of the crosslinking aid used. However, the amount is preferably within a range of 0.5 to 20 parts by weight per 100 parts by weight of the nitrile rubber (A).

Besides the above, compounding additives generally used in rubber, for examples, additives such as crosslink retarders, reinforcing agents, other fillers than the laminar inorganic filler (B), antioxidants, lubricants, tackifier, lubricating agents, processing aids, flame retardants, mildewproofing agents, antistatic agents and colorants may also be compounded into the crosslinkable nitrile rubber composition formed from the nitrile rubber composition according to the present invention as needed. As the antioxidant, may be used an antioxidant of a phenol, amine, benzimidazole or phosphoric acid type. Examples of the antioxidants include 2,2'-methylenebis- (4-methyl-6-t-butylphenol) as the phenol type, 4,4'-bis($\alpha,\alpha$-dimethylbenzyl)- diphenylamine and N-isopropyl-N'-phenyl-p-phenylenediamine as the amine type, and 2-mercaptobenzimidazole as the benzimidazole type. These antioxidants may be used either singly or in any combination thereof.

No particular limitation is imposed on a process for preparing the crosslinkable nitrile rubber composition according to the present invention, and it is only necessary to add the crosslinking agent, the crosslinking aid and other compounding additives to the nitrile rubber compound obtained by the above-described process and knead the resultant mixture by a kneader such as rolls or a Banbury mixer. Incidentally, no particular limitation is imposed on the compounding order in this case. However, it is preferable to sufficiently mix components hard to react or decompose with heat and then mix components (crosslinking agent, crosslinking aid, etc.) easy to decompose with heat in a short period of time at a temperature causing no decomposition.

The Mooney viscosity (hereinafter may referred to as "compound·Mooney viscosity") ($ML_{1+4}$, 100°C) of the crosslinkable nitrile rubber composition according to the present invention is preferably 5 to 300, more preferably 10 to 250.

[Crosslinked rubber material]

The crosslinked rubber material according to the present invention is obtained by crosslink the above-described crosslinkable nitrile rubber composition.

When the crosslinkable nitrile rubber composition is crosslinked, the composition is molded or formed by a molding or forming machine conforming to the shape of a molder or formed product (crosslinked rubber material) to be produced, for example, an extruder, an injection molding machine, a compression molding machine or rolls, and the resultant molded or formed product is then subjected to a crosslinking reaction to fix the shape of the crosslinked material. When the crosslinking is conducted, the crosslinking may be conducted after the molding or forming is conducted in advance, or the crosslinking may be conducted at the same time as the molding or forming. The molding or forming temperature is generally 10 to 200°C, preferably 25 to 120°C. The crosslinking temperature is generally 100 to 200°C, preferably 130 to 190°C. The crosslinking time is generally from 1 minute to 24 hours, preferably from 2 minutes to 1 hour.

The crosslinked rubber material may be further heated to conduct secondary crosslinking because the surface thereof is crosslinked, but the interior thereof may be not sufficiently crosslinked in some cases according to the shape and size thereof.

The thus-obtained crosslinked rubber material according to the present invention is a crosslinked rubber material excellent in resistance to permeation of gasoline in addition to properties inherent in nitrile rubber having good oil resistance.

As a result, the nitrile rubber composition, crosslinkable nitrile rubber composition and crosslinked material thereof according to the present invention are suitable for use in a wide variety of fields such as fuel hoses and fuel seals and can exhibit an effect that a burden on an environment can be reduced by reducing the amount of a fuel such as gasoline volatilized off in the air.

The crosslinked rubber material according to the present invention is suitably used as a hose for fuel by forming a hose composed of one or more layers comprising a layer formed of the crosslinked rubber material according to the present invention as at least one layer. In case of a laminate composed of at least 2 layers, the layer formed of the crosslinked rubber material according to the present invention may be used in any layer of an inner layer, an intermediate layer and an outer layer. Examples of material(s) forming other layer(s) of the laminate include nitrile rubber whose content of an $\alpha,\beta$-ethylenically unsaturated nitrile monomer unit is preferably 5 to 35% by weight, more preferably 18 to 30% by weight, and besides mixtures containing the nitrile rubber and a polyvinyl chloride or acrylic resin, fluorine-containing rubber, chloroprene rubber, hydrin rubber, chlorosulfonated polyethylene rubber, acrylic rubber, ethylene-acrylic acid copolymers, ethylene-propylene copolymers, ethylene-propylene-diene terpolymers, butyl rubber, isoprene rubber, natural rubber, styrene-butadiene copolymers, fluororesins, polyamide resins, polyvinyl alcohol, ethylene-vinyl acetate copolymer resins, ethylene-vinyl alcohol copolymer resins, poly(butylene naphthalate), poly(phenylene sulfide), polyolefin resins and polyester resins. These materials may be used either singly or in any combination thereof.

In order to bond the layer formed of the crosslinked rubber material according to the present invention to the other layer, a phosphonium salt such as tetrabutylphosphonium benzotriazolate, tetraoctylphosphonium benzotriazolate, methyltrioctylphosphonium benzotriazolate, tetrabutylphosphonium tolyltriarolate or tetraoctylphosphonium tolyltriazolate, a 1,8-diazabicyclo(5.4.0)undecene-7 salt (DBU salt), a 1,5-diazabicyclo(4.3.0)nonene-5 salt (DBN salt), or the like may also be contained in any one or both of the layer formed of the crosslinked rubber material according to the present invention and the other layer.

No particular limitation is imposed on a process for producing the hose comprising the crosslinked rubber material according to the present invention. However, the hose can be produced by forming the crosslinked rubber material into a cylindrical form by means of an extruder or the like and crosslinking the formed product. The crosslinkable nitrile rubber composition formed from the nitrile rubber composition according to the present invention can be produced by means of a mandrel. More specifically, when the hose is produced as a single-layer hose formed of the crosslinked nitrile rubber material according to the present invention alone, the crosslinkable nitrile rubber composition formed from the nitrile rubber composition according to the present invention is first formed into a cylindrical form, a mandrel is inserted into the cylindrically formed product thus obtained to fix the shape thereof, and the crosslinkable nitrile rubber composition is crosslinked, whereby the hose can be produced.

The crosslinked rubber material according to the present invention is suitable for use in, for example, seal members such as packings, gaskets, O-rings and oil seals; hoses such as oil hoses, fuel hoses, inlet hoses, gas hoses, brake hoses and refrigerant hoses; diaphragms; accumulator bladders; and boots. Examples of gasses transported by the gas hose include air, nitrogen, oxygen, hydrogen, carbon dioxide, carbon monoxide, methane, ethane, propane, dimethyl ether, LPG and steam.

EXAMPLES

The present invention will hereinafter be described more specifically by the following Examples and Comparative Examples. All designations of "part" or "parts" in the following Examples and Comparative Examples mean part or parts by weight unless expressly noted. Measuring methods or evaluating methods of physical properties and properties are as follows.

(1) Mooney viscosity

The Mooney viscosity (polymer·Mooney viscosity) ($ML_{1+4}$, 100°C) of nitrile rubber (A) was measured according to JIS K 6300.

(2) Normal physical properties (tensile strength, elongation and hardness)

A crosslinkable nitrile rubber composition was placed in a mold 15 cm long, 15 cm wide and 0.2 cm thick to conduct press molding for 20 minutes at 160°C while pressurizing to 10 MPa, thereby obtaining a sheet-like crosslinked rubber material. The sheet-like crosslinked rubber material thus obtained was die-cut by JIS No. 3 Dumbbell to prepare specimens. These specimens were used to measure the tensile strength and elongation of the crosslinked material according to JIS K 6251. The hardness of the crosslinked material was measured by means of a durometer hardness tester type A according to JIS K 6253.

(3) Resistance to permeation of gasoline

Fuel oil for test, CE-20 (volume ratio: isooctane/toluene/ethanol = 40/40/20) was used to measure an amount of gasoline permeated by an aluminum cup method. More specifically, 50 ml of the fuel oil for test, CE-20 was put in an aluminum cup (its opening was in the form of a circle having a diameter of 57 mm) of 100 ml in capacity, this cup was covered with a disc which was cut out of a sheet-like crosslinked rubber material obtained in the same manner as in the item (2) and had a diameter of 61 mm and a thickness of 2 mm, and the disc formed of the crosslinked rubber material was controlled by a clamp in such a manner that an area isolating both interior and exterior of the cup from each other is 25.50 cm$^2$. This cup was left to stand in a thermostatic chamber of 23°C to measure its weight every 24 hours, thereby measuring an amount of the fuel oil for test permeated every 24 hours, and a maximum value thereof was regarded as a gasoline permeation rate P (unit: g·mm/m$^2$·day). The smaller the gasoline permeation rate, the far excellent the resistance to permeation of gasoline.

(4) Volume-based particle size distribution of laminar inorganic filler

The volume-based particle size distribution of a laminar inorganic filler was determined by using pure water to prepare a slurry liquid having a turbidity of 10% and conducting measurement at a measuring refractive index of 1.33 by means of a laser diffraction scattering particle size measuring apparatus (LS230, manufactured by BECKMAN COULTER, INC.).

(5) Content of methyl ethyl ketone-insoluble matter

After 1 g of nitrile rubber was immersed in 200 ml of methyl ethyl ketone and left to stand for 24 hours at 23 °C, the resulting solution was filtered through a 325-mesh wire gauze, the resulting filtrate was evaporated to dryness, and the remaining dry solids [methyl ethyl ketone-soluble matter: (y) g] thus obtained were weighed to calculate out a content of the methyl ethyl ketone-insoluble matter in accordance with the following equation.

$$\text{Content of methyl ethyl ketone-insoluble matter (\% by weight)} = 100 \times (1 - y)/1$$

[Example 1]

(Preparation of nitrile rubber latex)

A reaction vessel was charged with 240 parts of water, 50 parts of acrylonitrile, 2.2 parts of 2-vinylpyridine and 2.5 parts of sodium dodecylbenzenesulfonate (emulsifier) to control the temperature of the contents to 5°C. After a gas phase was then vacuumized to sufficiently deaerate the reaction vessel, 20 parts of 1,3-butadiene, 0.06 parts of para-menthane hydroperoxide that is a polymerization initiator, 0.02 parts of sodium ethylenediaminetetraacetate, 0.006 parts of iron(II) sulfate (heptahydrate), 0.06 parts of sodium formaldehyde sulfoxylate and 1 part of t-dodecylmercaptan that is a chain-transfer agent were added to start a first-stage reaction in emulsion polymerization. At the points of time the conversion of the charged monomers into a polymer had reached 42% by weight and 60% by weight after the reaction had been started, 1,3-butadiene was added in respective amounts of 20 parts and 18 parts to the reaction vessel to conduct a second-stage polymerization reaction and a third-stage polymerization reaction. Thereafter, at the point of time the conversion of all the monomers charged into a polymer had reached 75% by weight, 0.3 parts by weight of hydroxylamine sulfate and 0.2 parts of potassium hydroxide were added to stop the polymerization reaction. After the reaction was stopped, the contents in the reaction vessel were heated to 70°C, and unreacted monomers were recovered by steam distillation under reduced pressure to obtain a latex (solid content: 24% by weight, pH at an isoelectric point: 2.6) of nitrile rubber (n1).

After a part of the latex was sampled and coagulated with a large amount of methanol, the sample was separated by filtration and dried to obtain the nitrile rubber (n1). The contents of the respective monomer units making up the nitrile rubber (n1) thus obtained were measured by $^1$H-NMR using an FT-NMR apparatus (JNM-EX400WB) manufactured by JEOL Ltd. As a result, the contents of the acrylonitrile unit, 1,3-butadiene unit and 2-vinylpyridine unit were 40% by weight, 58% by weight and 2% by weight, respectively. The Mooney viscosity (polymer·Mooney viscosity) of the nitrile rubber (n1) was 73, and the content of methyl ethyl ketone-insoluble matter thereof was at most 1% by weight.

(Preparation of aqueous dispersion of laminar inorganic filler)

One hundred parts of purified montmorillonite (product name "BENGEL HVP", product of HOJUN Co., Ltd., aspect ratio: 285) as a laminar inorganic filler were added to 1,995 parts of distilled water in the presence of 5 parts of sodium polyacrylate and stirred for 24 hours at 500 rpm by means of a stirrer, and dissolution was then visually confirmed. The resultant solution was then left to stand for 24 hours for stabilizing the solution to obtain an aqueous dispersion (b1) of the laminar inorganic filler having a solid content concentration of 5% and a pH of 10. The aqueous dispersion (b1) was revolved for 10 minutes at 1,000 rpm by means of a centrifugal separator (product name "H-2000B", manufactured by KOKUSAN Co., Ltd.) for classifying the aqueous dispersion (b1), a supernatant liquid (a portion of 50% of the whole solution volume from the top of a liquid level) of the aqueous dispersion (b1) centrifuged was collected to obtain an aqueous dispersion (b2) of the laminar inorganic filler. A volume-based particle size distribution of the laminar inorganic filler in the aqueous dispersion (b2) is as illustrated in FIG. 1.

(Preparation of nitrile rubber composition)

The aqueous dispersion (b2) of the laminar inorganic filler prepared above was added to the latex of the nitrile rubber (n1) obtained above while stirring the latex in a container, thereby dispersing the laminar inorganic filler. Incidentally, the aqueous dispersion (b2) of the laminar inorganic filler was added in such a manner that the proportion of the laminar inorganic filler is 20 parts per 100 parts of solids (nitrile rubber content) in the latex of the nitrile rubber (n1), thereby obtaining a nitrile rubber latex (a1) in which the concentration of solids (nitrile rubber and laminar inorganic filler) was 15%.

On the other hand, a 50% by weight aqueous emulsion of di(butoxyethoxyethyl) adipate (product name "ADEKACIZER RS-107", product of ADEKA CORPORATION) that is a plasticizer was prepared by using potassium oleate as an emulsifier in a proportion of 2% by weight based on the plasticizer and mixing both components under strong stirring.

The above-prepared aqueous emulsion containing di(butoxyethoxyethyl) adipate was added in a proportion of 20 parts (plasticizer content: 10 parts) per 100 parts of the nitrile rubber (n1) to the nitrile rubber latex (a1), and the resultant mixture was mixed and dispersed to obtain a nitrile rubber latex composition (c1).

The thus-obtained latex composition (c1) of the nitrile rubber (n1) was poured into an aqueous solution containing calcium chloride (coagulant) in an amount of 4 parts by weight per 100 parts by weight of the nitrile rubber (n1) in the latex composition (c1) under stirring while controlling a pH by adding 10% dilute sulfuric acid at the right moment into the aqueous solution in such a manner that the pH of the aqueous solution during coagulation becomes 2.0, thereby coagulating the latex composition to form crumbs composed of a mixture of the nitrile rubber (n1), laminar inorganic filler and plasticizer.

The thus-obtained crumbs were separated by filtration, washed with water and then dried at 60°C under reduced pressure to obtain a nitrile rubber composition.

(Preparation of crosslinkable nitrile rubber composition and production of crosslinked nitrile rubber material)

MT carbon black ["THERMAX (trademark), medium thermal carbon black N990", product of CANCARB Co.], zinc white as a crosslinking aid and stearic acid were added in proportions of 10 parts, 5 parts and 1 part, respectively, per 100 parts of the nitrile rubber (n1) in the nitrile rubber composition by means of a Banbury mixer and mixed at 50°C. The resultant mixture was then transferred to rolls, and 0.5 parts of 325 mesh sulfur that is a crosslinking agent, 1.5 parts of tetramethylthiuram disulfide (product name "NOCCELER TT", product of OUCHI SHINKO CHEMICAL INDUSTRIAL CO., LTD., crosslinking promotor) and 1.5 parts ofN-cyclohexyl-2-benzothiazolylsulfenamide (product name "NOCCELER CZ", product of OUCHI SHINKO CHEMICAL INDUSTRIAL CO., LTD.) that is a crosslinking promotor were added and kneaded at 50°C to prepare a crosslinkable nitrile rubber composition.

With respect to a crosslinked rubber material obtained by crosslinking the resultant crosslinkable nitrile rubber composition, normal physical properties (tensile strength, elongation and hardness) and resistance to permeation of gasoline were respectively evaluated. The results are shown in Table 1.

[Example 2]

A latex of nitrile rubber (n2) whose contents of the acrylonitrile unit and 1,3-butadiene unit were 40% by weight and 60% by weight, respectively, whose Mooney viscosity (polymer·Mooney viscosity) was 65, and whose content of methyl ethyl ketone-insoluble matter was at most 1 % by weight was obtained in the same manner as in Example 1 except that the charged monomers at the first-stage reaction in the emulsion polymerization were changed to 50 parts of acrylonitrile and 30 parts of 1,3-butadiene, and at the points of time the conversion of the charged monomers into a polymer had reached 34% by weight and 58% by weight, 1,3-butadiene was added in respective amounts of 20 parts to the reaction vessel to conduct a second-stage polymerization reaction and a third-stage polymerization reaction. Respective compositions were prepared in the same manner as in Example 1 except that the latex of the nitrile rubber (n2) was used in place of the latex of the nitrile rubber (n1), and the evaluations were made likewise. The results are shown in Table 1.

[Example 3]

The latex of the nitrile rubber (n2) was prepared in the same manner as in Example 2, and a palladium catalyst (a solution obtained by mixing equal weights of a 1% by weight acetone solution of palladium acetate and ion-exchanged water) was added to the reaction vessel in such a manner that a palladium content is 1,000 ppm based on the dry weight of the rubber contained in the latex, thereby subjecting the latex of the nitrile rubber (n2) to a hydrogenation reaction for 6 hours at 50°C under a hydrogen pressure of 3 MPa to obtain a latex of nitrile rubber (n3) whose contents of the acrylonitrile unit and 1,3-butadiene unit (including the hydrogenated portion) were 40% by weight and 60% by weight, respectively, whose polymer·Mooney viscosity was 100, whose iodine value was 15, and whose content of methyl ethyl ketone-insoluble matter was at most 1% by weight.

On the other hand, the aqueous dispersion of the laminar inorganic filler was classified in the same manner as in Example 1 except that the time of the centrifugation in the preparation of the aqueous dispersion of the laminar inorganic filler in Example 1 was changed to 20 minutes from 10 minutes, thereby obtaining an aqueous dispersion (b3) of the laminar inorganic filler.

Respective compositions were prepared in the same manner as in Example 1 except that the latex of the nitrile rubber (n3) was used in place of the latex of the nitrile rubber (n1), and the aqueous dispersion (b3) was used in place of the aqueous dispersion (b2), and the evaluations were made likewise. The results are shown in Table 1.

[Example 4]

After a pressure reaction vessel was charged with 120 parts of water, 0.8 parts of sodium laurylsulfate and 0.06 parts of potassium persulfate, and deaeration under pressure was conducted repeatedly twice, 100 parts of vinyl chloride was charged, and the contents were heated with stirring to conduct emulsion polymerization at 47°C. After a conversion into a polymer reached 90%, the contents were cooled to room temperature, and unreacted monomer was removed. The concentration of a polyvinyl chloride resin in the latex thus obtained was 41 % by weight. The average particle diameter of the polyvinyl chloride resin was 0.3 μm as measured according to the centrifugal sedimentation turbidity method. The average polymerization degree thereof was 1,300 as measured according to JIS K 6721, and the glass transition temperature thereof was 80°C.

On the other hand, the aqueous dispersion of the laminar inorganic filler was classified in the same manner as in Example 1 except that the time of the centrifugation in the preparation of the aqueous dispersion of the laminar inorganic filler in Example 1 was changed to 3 hours from 10 minutes, thereby obtaining an aqueous dispersion (b4) of the laminar inorganic filler.

Respective compositions were prepared in the same manner as in Example 1 except that the aqueous dispersion (b4) of the laminar inorganic filler was used in place of the aqueous dispersion (b2) of the laminar inorganic filler, the laminar inorganic filler and the plasticizer were used in respective proportions of 20 parts and 10 parts per 70 parts of solids (nitrile rubber content) in the latex of the nitrile rubber (n1), and the latex of the polyvinyl chloride resin (containing the polyvinyl chloride resin in a proportion of 30 parts per 70 parts of the nitrile rubber) was added together with the aqueous emulsion of the plasticizer to conduct mixing and dispersion, and the evaluations were made likewise. The results are shown in Table 1.

[Example 5]

A reaction vessel was charged with 150 parts of ion-exchanged water, 2 parts of sodium octylsulfate and 0.3 parts of ammonium persulfate (polymerization initiator), 80 parts of methyl methacrylate, 20 parts of acrylonitrile and 0.05 parts of t-dodecyhnercaptan (molecular weight modifier), emulsion polymerization was started at a temperature of 80°C with stirring, and the reaction was stopped after 5 hours to obtain a latex. The concentration of an acrylic resin in the latex thus obtained was 39% by weight and the conversion into the polymer was 98% by weight. The average particle diameter of the acrylic resin was 0.2 μm, the number-average molecular weight thereof was 600,000, and the glass transition temperature thereof was 103°C.

On the other hand, the aqueous dispersion (b4) of the laminar inorganic filler prepared in the same manner as in Example 4 was frozen and crushed by means of a freeze crusher (manufactured by Retsch Co., Ltd.). More specifically, the aqueous dispersion (b4) of the laminar inorganic filler was cooled and frozen to obtain a frozen product, a sample container containing steel balls made of tungsten carbide and the frozen product was installed on a crushing rod, the crushing rod was installed in a crusher body, and the whole sample container was then immersed in liquid nitrogen to sufficiently refrigerate the frozen product and the steel balls. Thereafter, the crushing rod was vertically and reciprocatedly moved, whereby the steel balls in the sample container were moved to conduct freeze crushing for 10 minutes. The frozen product after the crushing was then heated and melted to obtain an aqueous dispersion (b5) of the laminar inorganic filler.

Respective compositions were prepared in the same manner as in Example 1 except that the aqueous dispersion (b5) of the laminar inorganic filler was used in place of the aqueous dispersion (b2) of the laminar inorganic filler, the laminar inorganic filler and the plasticizer were used in respective proportions of 20 parts and 10 parts per 70 parts of solids (nitrile rubber content) in the latex of the nitrile rubber (n1), and the latex of the acrylic resin (containing the acrylic resin in a proportion of 30 parts per 70 parts of the nitrile rubber) was added together with the aqueous emulsion of the plasticizer to conduct mixing and dispersion, and the evaluations were made likewise. The results are shown in Table 1.

[Example 6]

A reaction vessel was charged with 240 parts of water, 24 parts of styrene, 45 parts of acrylonitrile and 2.5 parts of sodium dodecylbenzenesulfonate (emulsifier) to control the temperature of the contents to 20°C. After a gas phase was then vacuumized to sufficiently deaerate the reaction vessel, 31 parts of 1,3-butadiene, 0.06 parts of para-menthane hydroperoxide that is a polymerization initiator, 0.02 parts of sodium ethylenediaminetetraacetate, 0.006 parts of iron(II) sulfate (heptahydrate), 0.06 parts of sodium formaldehyde sulfoxylate and 0.05 parts of t-dodecylmercaptan that is a chain-transfer agent were added to start a first-stage reaction in emulsion polymerization. At the point of time the conversion of the charged monomers into a polymer had reached 75% by weight after the reaction had been started, 0.3 parts by weight of hydroxylamine sulfate and 0.2 parts of potassium hydroxide were added to stop the polymerization reaction. After the reaction was stopped, the contents in the reaction vessel were heated to 70°C, and unreacted monomers were recovered by steam distillation under reduced pressure to obtain a latex (solid content: 20% by weight) of nitrile rubber (n4).

After a part of the latex was sampled and coagulated with a large amount of methanol, the sample was separated by filtration and dried to obtain the nitrile rubber (n4). The contents of the respective monomer units making up the nitrile rubber (n4) thus obtained were measured by means of an NMR device (trade name: ADVANCE III400, manufactured by Bruker BioSpin Corp.). As a result, the contents of the acrylonitrile unit, 1,3-butadiene unit and styrene unit were 40% by weight, 40% by weight and 20% by weight, respectively. The content of methyl ethyl ketone-insoluble matter in the nitrile rubber (n4) was 60% by weight.

A latex of the nitrile rubber (n2) was then prepared in the same manner as in Example 2, and the latex of the nitrile rubber (n2) and the latex of the nitrile rubber (n4) were mixed in such a manner that a weight ratio of the nitrile rubber (n2) to the nitrile rubber (n4) is 60:40, thereby obtaining a latex of nitrile rubber (n5).

After a part of the latex of the nitrile rubber (n5) was sampled and coagulated with a large amount of methanol, the sample was separated by filtration and dried to obtain the nitrile rubber (n5). The contents of the respective monomer units making up the nitrile rubber (n5) thus obtained were measured by $^1$H-NMR using the NMR device (trade name: ADVANCE III400, manufactured by Bruker BioSpin Corp.). As a result, the contents of the acrylonitrile unit, 1,3-butadiene unit and styrene unit were 40% by weight, 52% by weight and 8% by weight, respectively. The content of methyl ethyl ketone-insoluble matter in the nitrile rubber (n5) was 24% by weight.

Respective compositions were prepared in the same manner as in Example 1 except that the latex of the nitrile rubber (n5) was used in place of the latex of the nitrile rubber (n1), and the evaluations were made likewise. The results are shown in Table 1.

[Comparative Example 1]

Respective compositions were prepared in the same manner as in Example 1 except that the aqueous dispersion (b1) of the laminar inorganic filler was used in place of the aqueous dispersion (b2) of the laminar inorganic filler, and the evaluations were made likewise. The results are shown in Table 1.

[Comparative Example 2]

The conditions of the treatment by the centrifugal separator in the classification of the aqueous dispersion (b1) of the laminar inorganic filler were changed to 1,000 rpm and 1 minute from 1,000 rpm and 10 minutes to obtain an aqueous dispersion (b6) of the laminar inorganic filler. Respective compositions were prepared in the same manner as in Example 1 except that the aqueous dispersion (b6) of the laminar inorganic filler was used in place of the aqueous dispersion (b2) of the laminar inorganic filler, and the evaluations were made likewise. The results are shown in Table 1.

[Comparative Example 3]

The aqueous dispersion (b5) of the laminar inorganic filler prepared in the same manner as in Example 5 was frozen and crushed again by means of a freeze crusher (manufactured by Japan Analytical Industry Co., Ltd.). More specifically, the aqueous dispersion (b5) of the laminar inorganic filler was cooled and frozen to obtain a frozen product, a sample container containing steel balls made of tungsten carbide and the frozen product was installed on a crushing rod, the crushing rod was installed in a crusher body, and the whole sample container was then immersed in liquid nitrogen to sufficiently refrigerate the frozen product and the steel balls. Thereafter, the crushing rod was vertically and reciprocatedly moved, whereby the steel balls in the sample container were moved to conduct freeze crushing for 1 hour. The frozen product after the crushing was then heated and melted to obtain an aqueous dispersion (b7) of the laminar inorganic filler.

Respective compositions were prepared in the same manner as in Example 1 except that the aqueous dispersion (b7) of the laminar inorganic filler was used in place of the aqueous dispersion (b2) of the laminar inorganic filler, and the evaluations were made likewise. The results are shown in Table 1.

[Comparative Example 4]

Respective compositions were prepared in the same manner as in Example 1 except that untreated calcium carbonate (product name "SILVER W", product of SHIRAISHI KOGYO KAISHA, LTD., aspect ratio: 3.5, average particle diameter: 3 μm, specific surface area: 5.5 m$^2$/g) was used in place of the laminar inorganic filler, and the evaluations were made likewise. The results are shown in Table 1.

[Table 1]

| | | Ex.1 | Ex. 2 | Ex.3 | Ex.4 | Ex.5 | Ex.6 | Comp.Ex.1 | Comp.Ex.2 | Comp.Ex.3 | Comp.Ex.4 |
|---|---|---|---|---|---|---|---|---|---|---|---|
| | Aqueous dispersion of laminar irownicfiller | b2 | b2 | b3 | b4 | b5 | b2 | b1 | b6 | b7 | - |
| | Particle size distribution area ratio of particles of at least 1.0 $\mu$m (%) | 26.1 | 26.1 | 20.1 | 1.5 | 2.6 | 26.1 | 71.1 | 32.3 | 24.1 | 86.5 |
| | Maximum peak particle diameter ($\mu$m) | 0.26 | 0.26 | 0.26 | 0.24 | 0.12 | 0.26 | 1.83 | 0.31 | 0.08 | 2.75 |
| | Frequency volume in maximum peak particle diameter (%) | 5.0 | 5.0 | 5.4 | 5.9 | 6.4 | 5.0 | 8.0 | 2.9 | 7.7 | 9.6 |
| | Classificatin method | Centrifuging for 10min | Centrifuging for 10 min | Centrifuging for 20 min | Centrifuging for 3 br | Freeze-crushing of b4, and re-melted | Centrifuging for 10 min | Not classified | Centrifuging for 1 min | Freeze-crushing of b5, and re-melted- | Not classified |
| | Nitrile rubber | n1 | n2 | n3 | n1 | n1 | n5 | n1 | n1 | n1 | n1 |
| | Acrylonitrile unit (%by weight) | 40 | 40 | 40 | 40 | 40 | 40 | 40 | 40 | 40 | 40 |
| | 1,3-Butadiene unit (including hydrogenated portion) (% by weight) | 58 | 60 | 60 | 58 | 58 | 52 | 58 | 58 | 58 | 58 |
| | 2-Vinylpyridine unit(%by weight) | 2 | 0 | 0 | 2 | 2 | 0 | 2 | 2 | 2 | 2 |
| | Styrene unit (%by weight) | 0 | 0 | 0 | 0 | 0 | 8 | 0 | 0 | 0 | 0 |
| | Methylethylketone-insoluble matter (% by weight) | Atmost 1% | At most 1% | At most 1% | At most 1% | At most 1% | 24% | At most 1% | At most 1% | At most 1% | At most 1% |

(continued)

| | | Ex.1 | Ex. 2 | Ex.3 | Ex.4 | Ex.5 | Ex.6 | Comp.Ex.1 | Comp.Ex.2 | Comp.Ex.3 | Comp.Ex.4 |
|---|---|---|---|---|---|---|---|---|---|---|---|
| | Iodine value | Not measured | Not measured | 15 | Not measured | Not measured | Not measured | Not measured | Not measured | Not measured | Not measured |
| | Nitrile rubber composition | | | | | | | | | | |
| | Nitrile rubber (parts) | 100 | 100 | 100 | 70 | 70 | 100 | 100 | 100 | 100 | 100 |
| | Montomorillonite (parts) | 20 | 20 | 20 | 20 | 20 | 20 | 20 | 20 | 20 | - |
| | Calcium carbonate (untreated) (parts) | - | - | - | - | - | - | - | - | - | 20 |
| | Polyvinyl chloride resin (parts) | - | - | - | 30 | - | - | - | - | - | - |
| | Acrylic resin (parts) | - | - | - | - | 30 | - | - | - | - | - |
| | Plasticizer (parts) | 10 | 10 | 10 | 10 | 10 | 10 | 10 | 10 | 10 | 10 |
| Tensile strength (MPa) | | 16.4 | 16.8 | 16.2 | 16.8 | 17.0 | 21.5 | 16.8 | 16.2 | 17.2 | 7.9 |
| Elongation (%) | | 490 | 470 | 440 | 470 | 490 | 330 | 470 | 500 | 430 | 550 |
| Hardness (Duro-A) | | 79 | 78 | 82 | 81 | 80 | 92 | 74 | 78 | 83 | 55 |
| Gasoline permeation coefficient (Fuel CE20)(g·mm/m$^2$·day) | | 321 | 421 | 359 | 312 | 348 | 312 | 555 | 518 | 528 | 1498 |

It is understood from Table 1 that Examples 1 to 6 satisfying all the requirements as provided for in the present application resulted in good normal physical properties and excellent resistance of permeation of gasoline.

On the other hand, Comparative Example 1 that does not satisfy the requirements of the present invention because "the ratio of a particle size distribution area of particles having a volume-based particle diameter of at least 1.0 μm to the whole particle size distribution area" and "the maximum peak particle diameter" are too high or large due to the fact that the classification of the laminar inorganic filler was not conducted resulted in providing the crosslinked rubber material poor in resistance to permeation of gasoline.

In addition, Comparative Example 2 that does not satisfy the requirements of the present invention because "the ratio of a particle size distribution area of particles having a volume-based particle diameter of at least 1.0 μm to the whole particle size distribution area" of the resultant laminar inorganic filler is too high, and "the frequency volume in the maximum peak particle diameter" is too small due to the fact that the classification of the laminar inorganic filler was conducted, but the time of the centrifugation is short also resulted in providing the crosslinked rubber material poor in resistance to permeation of gasoline.

Further, Comparative Example 3 that does not satisfy the requirements of the present invention because "the maximum peak particle diameter" is too small due to the fact that the aqueous dispersion (b5) of the laminar inorganic filler which satisfies the volume-based particle size distribution provided for in the present invention was subjected to the freeze-crushing and heat-melting treatment again also resulted in providing the crosslinked rubber material poor in resistance to permeation of gasoline.

Furthermore, when calcium carbonate that has an aspect ratio of 3.5 and does not belong to the laminar inorganic filler was used, the resultant crosslinked rubber material resulted in being poor in not only resistance of permeation of gasoline, but also tensile strength and hardness in the normal physical properties (Comparative Example 4).

INDUSTRIAL APPLICABILITY

According to the present invention, there can be provided a nitrile rubber composition and a crosslinkable nitrile rubber composition that each give a crosslinked nitrile rubber material excellent in resistance to permeation of gasoline, and a crosslinked rubber material thereof. As a result, the crosslinked rubber material obtained from the nitrile rubber composition according to the present invention is also excellent in resistance to permeation of gasoline in addition to properties inherent in nitrile rubber having good oil resistance, and is thus suitable for use in a wide variety of fields such as fuel hoses and fuel seals and can reduced a burden on an environment by reducing the amount of a fuel such as gasoline volatilized off in the air.

**Claims**

1.  A nitrile rubber composition comprising:

    nitrile rubber (A) comprising 25 to 60% by weight of an α,β-ethylenically unsaturated nitrile monomer unit, 40 to 75% by weight of a conjugated diene monomer unit, at least part of which may be hydrogenated, and 0 to 30% by weight of a cationic monomer unit, and
    a laminar inorganic filler (B) contained in a proportion of 1 to 100 parts by weight per 100 parts by weight of the nitrile rubber (A), in a volume-based particle size distribution of said laminar inorganic filler (B), a) a ratio of a particle size distribution area of particles having a volume-based particle diameter of at least 1.0 μm to the whole particle size distribution area being at most 30%, b) a maximum peak particle diameter being 0.10 to 1.0 μm, and c) a frequency volume in the maximum peak particle diameter being at least 3.0% (wherein a), b), and c) are determined according to the methods of the description).

2.  The nitrile rubber composition according to claim 1, wherein the content of the cationic monomer unit in the nitrile rubber (A) is 0.1 to 20% by weight.

3.  The nitrile rubber composition according to claim 2, wherein the cationic monomer unit is a vinyl group-containing cyclic tertiary amine monomer unit.

4.  The nitrile rubber composition according to any one of claims 1 to 3, wherein the nitrile rubber (A) contains 5 to 60% by weight of methyl ethyl ketone-insoluble matter.

5.  The nitrile rubber composition according to any one of claims 1 to 4, which further comprises at least one thermoplastic resin selected from the group consisting of polyvinyl chloride resins and acrylic resins in a proportion of 1 to 100 parts by weight per 100 parts by weight of the nitrile rubber (A).

6. A crosslinkable nitrile rubber composition comprising the nitrile rubber composition according to any one of claims 1 to 5 and a crosslinking agent.

7. A crosslinked rubber material obtained by crosslinking the crosslinkable nitrile rubber composition according to claim 6.

8. A production process of the nitrile rubber composition according to claim 1, comprising mixing
a latex of nitrile rubber (A) comprising 25 to 60% by weight of an $\alpha,\beta$-ethylenically unsaturated nitrile monomer unit, 40 to 75% by weight of a conjugated diene monomer unit, at least part of which may be hydrogenated, and 0 to 30% by weight of a cationic monomer unit, and
an aqueous dispersion of a laminar inorganic filler (B), in the volume-based particle size distribution of said laminar organic filler (B), a) a ratio of a particle size distribution area of particles having a volume-based particle diameter of at least 1.0 $\mu$m to the whole particle size distribution area being at most 30%, b) a maximum peak particle diameter being 0.10 to 1.0 $\mu$m, and c) a frequency volume in the maximum peak particle diameter being at least 3.0% at a quantity ratio that a proportion of solids of the laminar inorganic filler (B) to 100 parts by weight of solids of the nitrile rubber (A) amounts to 1 to 100 parts by weight, and then
coagulating the resultant mixture to form crumbs and drying the crumbs.

## Patentansprüche

1. Nitrilkautschukzusammensetzung, umfassend:

   Nitrilkautschuk (A), umfassend 25 bis 60 Gew.-% einer $\alpha,\beta$-ethylenisch ungesättigten Nitrilmonomereinheit, 40 bis 75 Gew.-% einer konjugierten Dienmonomereinheit, von der wenigstens ein Teil hydriert sein kann, und 0 bis 30 Gew.-% einer kationischen Monomereinheit, sowie
   einen laminären anorganischen Füllstoff (B), der in einem Anteil von 1 bis 100 Gewichtsteilen je 100 Gewichtsteile des Nitrilkautschuks (A) enthalten ist, in der volumenbezogenen Teilchengrößenverteilung des laminären anorganischen Füllstoffs (B), wobei a) das Verhältnis der Teilchengrößenverteilungsfläche der Teilchen mit einem volumenbezogenen Teilchendurchmesser von wenigstens 1,0 $\mu$m zur gesamten Teilchengrößenverteilungs-fläche höchstens 30% ist, b) der maximale Peakteilchendurchmesser 0,10 bis 1,0 $\mu$m beträgt, und c) das Frequenzvolumen im maximalen Peakteilchendurchmesser wenigstens 3,0% beträgt, wobei a), b) und c) gemäß den in der Beschreibung gegebenen Verfahren bestimmt werden.

2. Nitrilkautschukzusammensetzung gemäß Anspruch 1, wobei der Gehalt an kationischer Monomereinheit im Nitrilkautschuk (A) 0,1 bis 20 Gew.-% beträgt.

3. Nitrilkautschukzusammensetzung gemäß Anspruch 2, wobei die kationische Monomereinheit eine vinylgruppenhaltige Monomereinheit eines cyclischen tertiären Amins ist.

4. Nitrilkautschukzusammensetzung gemäß einem der Ansprüche 1 bis 3, wobei der Nitrilkautschuk (A) 5 bis 60 Gew.-% in Methylethylketon unlösliches Material enthält.

5. Nitrilkautschukzusammensetzung gemäß einem der Ansprüche 1 bis 4, welche des Weiteren wenigstens ein thermoplastisches Harz umfasst, ausgewählt aus der Gruppe, bestehend aus Polyvinylchloridharzen und Acrylharzen, in einem Anteil von 1 bis 100 Gewichtsteilen je 100 Gewichtsteile des Nitrilkautschuks (A).

6. Vernetzbare Nitrilkautschukzusammensetzung, umfassend die Nitrilkautschukzusammensetzung gemäß einem der Ansprüche 1 bis 5 und ein Vernetzungsmittel.

7. Vernetztes Kautschukmaterial, erhalten durch Vernetzen der vernetzbaren Nitrilkautschukzusammensetzung gemäß Anspruch 6.

8. Herstellungsverfahren für die Nitrilkautschukzusammensetzung gemäß Anspruch 1, umfassend Vermischen von einem Latex aus Nitrilkautschuk (A), umfassend 25 bis 60 Gew.-% einer $\alpha,\beta$-ethylenisch ungesättigten Nitrilmono-mereinheit, 40 bis 75 Gew.-% einer konjugierten Dienmonomereinheit, von der wenigstens ein Teil hydriert sein kann, und 0 bis 30 Gew.-% einer kationischen Monomereinheit, sowie

einer wässrigen Dispersion eines laminären anorganischen Füllstoffs (B), in der volumenbezogenen Teilchengrößenverteilung des laminären anorganischen Füllstoffs (B), wobei a) das Verhältnis der Teilchengrößenverteilungsfläche der Teilchen mit einem volumenbezogenen Teilchendurchmesser von wenigstens 1,0 μm zur gesamten Teilchengrößenverteilungsfläche höchstens 30% ist, b) der maximale Peakteilchendurchmesser 0,10 bis 1,0 μm beträgt, und c) das Frequenzvolumen im maximalen Peakteilchendurchmesser wenigstens 3,0% beträgt,

bei einem Mengenverhältnis, bei welchem der Anteil an Feststoffen des laminären anorganischen Füllstoffs (B) zu 100 Gewichtsteilen Feststoffen des Nitrilkautschuks (A) 1 bis 100 Gewichtsteile beträgt, und anschließend Koagulieren des entstehenden Gemisches unter Bildung von Krümeln und Trocknen der Krümel.

## Revendications

1. Composition de caoutchouc à base de nitrile comprenant :

   un caoutchouc à base de nitrile (A) comprenant de 25 à 60 % en poids d'un motif monomère de nitrile à insaturation α,β-éthylénique, de 40 à 75 % en poids d'un motif monomère de diène conjugué, dont au moins une partie peut être hydrogénée et de 0 à 30 % en poids d'un motif monomère cationique, et
   une charge inorganique laminaire (B) contenue en une proportion de 1 à 100 parties en poids pour 100 parties en poids du caoutchouc à base de nitrile (A), selon une distribution de taille de particule basée sur le volume de ladite charge inorganique laminaire (B), a) un rapport d'une surface de distribution de taille de particule ayant un diamètre de particule basé sur le volume d'au moins 1,0 μm à la surface de distribution de taille de particule totale étant d'au plus 30 %, b) un diamètre de particule maximal étant de 0,10 à 1,0 μm, et c) un volume de fréquence dans le diamètre de particule maximal étant d'au moins 3,0 % (où a), b) et c) sont déterminés selon les méthodes de la description).

2. Composition de caoutchouc à base de nitrile selon la revendication 1, dans laquelle la teneur en motif monomère cationique dans le caoutchouc à base de nitrile (A) est de 0,1 à 20 % en poids.

3. Composition de caoutchouc à base de nitrile selon la revendication 2, dans laquelle le motif monomère cationique est un monomère d'amine tertiaire cyclique contenant un groupe vinyle.

4. Composition de caoutchouc à base de nitrile selon l'une quelconque des revendications 1 à 3, dans laquelle le caoutchouc à base de nitrile (A) contient de 5 à 60 % en poids d'une matière insoluble dans de la méthyléthylcétone.

5. Composition de caoutchouc à base de nitrile selon l'une quelconque des revendications 1 à 4, qui comprend en outre au moins une résine thermoplastique choisie dans le groupe constitué par les résines de polychlorure de vinyle et les résines acryliques en une proportion de 1 à 100 parties en poids pour 100 parties en poids du caoutchouc à base de nitrile (A).

6. Composition de caoutchouc à base de nitrile réticulable comprenant la composition de caoutchouc à base de nitrile selon l'une quelconque des revendications 1 à 5 et un agent de réticulation.

7. Matière de caoutchouc réticulée obtenue par la réticulation de la composition de caoutchouc à base de nitrile réticulable selon la revendication 6.

8. Procédé de production de la composition de caoutchouc à base de nitrile selon la revendication 1, consistant à mélanger
   un latex de caoutchouc à base de nitrile (A) comprenant de 25 à 60 % en poids d'un motif monomère de nitrile à insaturation α,β-éthylénique, de 40 à 75 % en poids d'un motif monomère de diène conjugué, dont au moins une partie peut être hydrogénée et de 0 à 30 % en poids d'un motif monomère cationique, et
   une dispersion aqueuse d'une charge inorganique laminaire (B), selon une distribution de taille de particule basée sur le volume de ladite charge inorganique laminaire (B), a) un rapport d'une surface de distribution de taille de particule ayant un diamètre de particule basé sur le volume d'au moins 1,0 μm à la surface de distribution de taille de particule totale étant d'au plus 30 %, b) un diamètre de particule maximal étant de 0,10 à 1,0 μm, et c) un volume de fréquence dans le diamètre de particule maximal étant d'au moins 3,0 %
   à un rapport de quantité dont une proportion de matières solides de la charge inorganique laminaire (B) à 100 parties en poids des solides du caoutchouc à base de nitrile (A) représente de 1 à 100 parties en poids, et ensuite

coaguler le mélange résultant pour former des granules et sécher les granules.

EP 2 463 335 B1

[Fig. 1]

[Fig. 2]

**EP 2 463 335 B1**

**Patent documents cited in the description**

- JP 2002146211 A
- US 6710111 B